**Europäisches Patentamt**

**European Patent Office**

**Office européen des brevets**

(19)

(11) Veröffentlichungsnummer: **0 164 622**
**B1**

(12)

# EUROPÄISCHE PATENTSCHRIFT

(45) Veröffentlichungstag der Patentschrift:
**24.08.88**

(51) Int. Cl.⁴: **C 09 K 3/18, C 05 G 3/04**

(21) Anmeldenummer: **85106275.2**

(22) Anmeldetag: **22.05.85**

---

(54) Gefrierschutz- und Bodenverbesserungsmittel, sowie Verfahren zu seiner Herstellung.

---

(30) Priorität: **24.05.84 CH 2547/84**

(43) Veröffentlichungstag der Anmeldung:
**18.12.85 Patentblatt 85/51**

(45) Bekanntmachung des Hinweises auf die Patenterteilung:
**24.08.88 Patentblatt 88/34**

(84) Benannte Vertragsstaaten:
**AT BE CH DE FR GB IT LI LU NL SE**

(56) Entgegenhaltungen:
**EP - A - 0 114 927**
**US - A - 4 377 488**
**US - A - 4 389 323**
**US - A - 4 400 285**
**US - A - 4 430 242**

**CIVIL ENGINEERING, Band 52, Nr. 7, Juli 1982, Seite 24, New York, US; "A substitute for road salt found"**

(73) Patentinhaber: **Gesellschaft für Forschung und Entwicklung von neuen Bautechnologien und Baustoffen Gesellschaft m.b.H., Albertgasse 33, A-1080 Wien (AT)**

(72) Erfinder: **Washüttl, Prof. Dr., Aschergasse 56, A-1130 Wien (AT)**

(74) Vertreter: **Büchel, Kurt F., Dr., Patentanwalt Dr. Kurt F. Büchel Bergstrasse 297, FL-9495 Triesen (LI)**

---

## Beschreibung

Die Erfindung betrifft ein Gefrierschutz- und Bodenverbesserungsmittel, wie es in Form von Streusalz zur Verhinderung von Strassenglätte im Winter eingesetzt wird, sowie ein Verfahren zur Herstellung des Mittels.

In den letzten Jahren ist das bisher für diesen Zweck fast ausschliesslich verwendete Natriumchlorid mehr und mehr unter Beschuss geraten: sowohl die Natrium- wie die Chloridionen haben äusserst schlechte Langzeitwirkungen auf die verschiedensten Pflanzen. Der teilweise oder vollständige Ersatz durch Calciumchlorid beseitigt nur einen Teil der Probleme und bringt technologische Schwierigkeiten. Die Verwendung von Harnstoff vermeidet zwar die von Chloridionen ausserdem noch verursachte Metallkorrosion und Betonschädigung, führt aber zu einer Überdüngung im Boden und einer unerwünschten Eutrophierung der Gewässer. Verschiedene weitere Vorschläge von Salzgemischen verschiedener Löslichkeit und Aggressivität konnten sich in Folge zu hoher Kosten nicht durchsetzen.

Man hat daher vor einiger Zeit vorgeschlagen (Dunn et al, Transportation Research Board, Special Report 185, 261–269, 1979) aus organischen Abfällen Essigsäure zu erzeugen und diese mit fein gemahlenem Dolomit (Calcium-Magnesium-Carbonat) zur Reaktion zu bringen. Leider war das dabei entstehende Calcium-Magnesium-Acetat (CMA) nur in sehr schlechter Ausbeute zu erhalten (15–40%); es enthielt auch offensichtlich eine Unmenge von Störsubstanzen und Schadstoffen, wie z.B. Oxalate, Propionate, Methanol, Blei (aus der Druckerschwärze des Altpapiers) etc. und konnte sich vermutlich deshalb seither nicht durchsetzen. Propionate wirken als Fungizide und sind daher für das Bodenbiotop nicht ideal; auch die daneben gebildeten Formiate (Salze der Ameisensäure) wirken schon in geringen Mengen als Konservierungsmittel; unter grösseren Mengen von Eisensalzen als Verunreinigung leidet die Auftauwirkung; Methanol hat einen unangenehmen Geruch; auch die nie ganz auszuschliessenden Aldehyde wirken bekanntlich bakterizid und störend vom Geruch her.

Ausserdem ist zu bedenken, dass Calcium- und/oder Magnesiumacetate in 0,5 bis 10%iger wässriger Lösung, die sich bei der Verwendung als Streusalz ergibt, einen pH-Wert von 7,7 bis 7,9 aufweisen, der – wie im Zuge der gegenständlichen Erfindung festgestellt werden konnte – in den meisten Böden schlechte Auswirkungen zeigt. Es wird nämlich bei Böden mit neutraler und schwach alkalischer pH-Reaktion der geringe Anteil an gebundenen Wasserstoffionen durch Calcium ausgetauscht. Durch die frei werdende Essigsäure, welche mit Calciumacetat als Puffersystem reagiert, tritt aber trotzdem im Boden eine Verschiebung in den sauren Bereich ein; Calciumacetat allein wird schon bei Zugabe von destilliertem Wasser deutlich zum Neutralpunkt verschoben. Für die Flora eines solchen Bodens bedeutet dies häufig eine Spätschädigung, bzw. toxische Schäden durch pflanzenverfügbares, dreiwertiges Aluminium.

Die Erfindung hat sich daher zur Aufgabe gestellt, ein Mittel der eingangs genannten Art zu schaffen, das einerseits eine minimale, oder besser gar keine Schädigung von Metalloberflächen oder Beton hervorruft und andererseits in möglichst vielen verschiedenen vorkommenden Bodentypen keine Schädigung von, sondern wenn möglich sogar eine günstige Wirkung auf die verschiedenen Pflanzen, insbesondere Laub- und Nadelgehölze zeigt. Diese Aufgabe wird erfindungsgemäss durch das Kennzeichen des Anspruchs 1 gelöst.

Es ist festzuhalten, dass bereits vorgeschlagen wurde (US-A 4 400 285), einem CMA mit einem Ca/Mg-Molverhältnis 1 bis zu 50% gebranntem Kalk zuzusetzen, um den Effekt des sauren Regens auszugleichen und beim Auflösen eine stärker exotherme Wirkung zu bekommen. Solche Mischungen mit enorm hoher Basizität (pH bis 10!) ergeben jedoch in Wirklichkeit eine für eine Vielzahl von Bodenbiotopen sehr schädliche, plötzliche pH-Wert-Verschiebung und überdies – wie die zur vorliegenden Erfindung führenden Entwicklungsarbeiten zeigten – eine geringere Gefrierpunktserniedrigung als bei nur kleinen Kalkzusätzen.

In anderen Vorschlägen verharrt man im wesentlichen immer bei einem pH-Wert von 7 bis 8, in der – wie sich erfindungsgemäss herausgestellt hat, irrigen – Meinung, dass mit diesem neutralen oder schwach alkalischen Wert dem Boden bestens gedient werden kann. Dies ist aber nicht der Fall.

Bei stark alkalischen Böden, bzw. Salzböden, sowie jenen Böden, die bereits an der Flora durch Kochsalz hervorgerufene Schäden erkennen lassen, wird der Überschuss der sauren Komponente am besten so eingestellt, dass der pH-Wert einer wässrigen Lösung des Mittels 5,5 bis 6,5 beträgt. Befindet man sich in einer Gegend originär saurer Böden, wie z.B. saurer Hochmoor- oder Waldböden, dann ist es zweckmässig, wenn der pH-Wert sogar unter 6,0 liegt. Dabei kommt es nicht, wie vom Fachmann bisher vermutet (z.B. in EP-A 0 114 927) zu starken Korrosionserscheinungen an Metalloberflächen, weil das Calcium-Magnesiumacetat eine so starke Pufferwirkung zeigt.

Obwohl verschiedene niedrige Carbonsäuren oder auch anorganische Säuren dazu herangezogen werden können, die erfindungsgemässe saure Komponente zu bilden, die ja nur in geringer Menge zugesetzt wird, hat es sich aus Gründen der Pflanzenverträglichkeit, der biologischen Abbaubarkeit, und der Errichtung eines Puffersystems am zweckmässigsten erwiesen, Essigsäure zu verwenden.

Die alkalische Komponente kann zwar grundsätzlich von Karbonaten, Hydroxyden, Oxyden, Silikaten, Phosphaten, od. dgl. von Alkalimetallen, Erdalkalimetallen und/oder Ammonium gebildet sein, wird aber aus noch zu erläuternden Gründen vorzugsweise von Calcium und/oder Magnesium in Form von nativem, gebranntem oder gelöschtem Kalk, Dolomit oder Magnesit gebildet. Befindet man sich auf neutralen bis schwach alkalischen Böden von einem pH-Wert bis maximal 8,4, dann sollen die alkalischen Komponenten im Mittel in einer solchen Menge enthalten sein, dass die pH-Werte der wässrigen Lösung des Mittels 8,1 bis 9,5, vorzugsweise aber 8,2 bis 9 betragen. Dasselbe gilt für saure Böden, die originär nicht sauer waren, und deren Acidität durch sauren Regen, Auswaschung von Kalk durch kohlensäurehaltiges Wasser etc. verursacht ist. Die genannten Zusätze sollen nur in einer Menge von weniger als 15%, vorzugsweise nur 0,1 bis 4% vorhanden sein, um die Auftauwirkung nicht merklich zu beeinträchtigen und den pH-Wert nicht unkontrollierbar zu verschieben. Im Hinblick auf Korrosionserscheinungen bei bewehrtem Beton und Eisen ist den Mitteln mit einem pH-Wert von über 8 der unbedingte Vorzug zu geben.

Da im Boden häufig Calcium im Vergleich zu Magnesium in überwiegendem Ausmass vorliegt, bedingt eine weitere Zufuhr von ausschliesslich Calciumacetat allein eine starke Ionenkonkurrenz für das im Boden vorhandene Magnesium, was zu einem Magnesiummangel und damit zu schweren Pflanzenschäden und -ausfällen führt. Andererseits sind reine Magnesiumsalze für eine Vielzahl von Pflanzen toxisch; ausserdem besteht eine Angriffsmöglichkeit bei Beton durch die Austauschbarkeit von Calciumdurch Magnesiumionen, die aber bei einem Überschuss an Calciumionen ausgeschlossen werden kann. Daher hat es sich als zweckmässig erwiesen, wenn die zusätzlichen Komponenten in einer solchen Menge vorliegen, dass das erfindungsgemässe Mittel insgesamt maximal 80, vorzugsweise 20 bis 30, oder äusserstenfalls 65 bis 80 Gewichtsprozent Magnesiumacetat enthält. Diese beiden Grenzen ergeben sich aus der im Zuge der Entwicklungsarbeiten, die zur gegenständlichen Erfindung führten, geschöpften Erkenntnis, dass bei einer Mischung gleicher Gewichtsteile Calciumacetat und Magnesiumacetat ein Eutektikum vorliegen dürfte, das eine geringere Gefrierpunkterniedrigung ergibt, als bei von diesem Eutektikum abweichenden Mischungsverhältnissen, wobei die Maxima in aller Regel (in Abhängigkeit von der Konzentration) bei etwa 25 und etwa 75%, d.h. bei einem Mischungsverhältnis von 1:3, bzw. 3:1 liegen. Über diese Mischungsverhältnisse hinaus sollte man in aller Regel nicht gehen, um die soeben erwähnten Nachteile zu vermeiden, die beim Einsatz von reinen Komponenten entstehen können. In diesem Sinne ist es auch zweckmässig, wenn der Zusatz einer alkalischen Komponente zum CMA – wo erforderlich – aus geringen Mengen (maximal 4%) MgO besteht.

Gegenüber dem vorerwähnten Vorschlag von Dunn et al sowie gegenüber anderen bekanntgewordenen Auftaumitteln bietet das erfindungsgemässe Mittel über die Regulierbarkeit seines pH-Wertes die Möglichkeit einer Anpassung an den pH-Wert des Bodens sowie der Bodenmelioration für das Pflanzenwachstum bei bereits umweltgeschädigten Böden. Das Mittel vermeidet auch Verunreinigungen, die die Auftauwirkung verschlechtern, und Schadstoffe, und es ermöglicht – wie in den folgenden Beispielen noch zu zeigen sein wird – eine wesentlich höhere Ausbeute bei der Herstellung.

Die aus der Literatur bekannt gewordenen Verfahren zur Herstellung von Calcium- und/oder Magnesium-Acetat ergeben nur bei sehr aufwendigem Arbeiten brauchbare Ausbeuten; die Verwendung von calcium- und/oder magnesiumhaltigen Gesteinen scheiterte bisher überhaupt meistens an den Verunreinigungen. Erfindungsgemäss wurde jedoch überraschend festgestellt, dass diese Störeffekte ausgeschaltet werden können, wenn ein Überschuss von dampfförmiger Essigsäure mit fein vermahlenem Calciumund/oder Magnesium-Karbonat, -Oxyd und/oder -Hydroxyd in einer Wirbelschicht zur Reaktion gebracht und der Essigsäureüberschuss nach Kondensation im Kreislauf zurückgeführt wird, während dem Reaktionsprodukt gegebenenfalls noch unreagiertes Calcium- und/oder Magnesium-Karbonat, -Oxyd und/oder -Hydroxyd zugesetzt wird. Der pH-Wert des erzielten Produktes kann aber auch durch Temperatur und Dauer der Reaktionsführung auf die gewünschte Höhe eingestellt werden.

Eine weitere interessante Verbesserung lässt sich erzielen, wenn dem erfindungsgemässen Mittel 1 bis 20, vorzugsweise etwa 10 Gewichtsprozent KCl zugesetzt werden. Neben einer erwünschten Verbilligung ergeben sich interessanterweise durch das starke Puffersystem des CMA kaum Schädigung durch das Chloridin, aber Verbesserungen hinsichtlich des physiologisch erwünschten Kalium gegenüber dem sonst überschüssigen Natrium; der wesentliche Vorteil aber ist, dass schon Zusatzmengen von 10% beträchtliche Gefrierpunktserniedrigungen geben.

In den folgenden Beispielen werden einige der erfindungsgemässen Aspekte näher veranschaulicht.

Beispiel 1

Es wurde ein Teil gebrannter Spezialdolomitkalk, im folgenden kurz Dolomit genannt, verwendet, der nach einem Glühverlust von 25% die Zusammensetzung: 57,8% CaO; 37,9% MgO; Rest Fe, Al, Mn, Si etc. aufwies. Die stöchiometrische Menge Essigsäure auf 30 Gramm Dolomit zur Bildung der Acetate beträgt 74,75 Gramm. Die Umsetzung erfolgte einmal mit doppelter Menge Essigsäure, einmal mit 10%igem Überschuss von Dolomit.

In beiden Fällen wurde die Essigsäure (Eisessig:Wasser = 1:1) vorgelegt und Dolomit portionsweise eingetragen. Beim Aufkochen entstand im ersten Fall eine trübe, rotbraune Lösung mit Bodensatz, im zweiten Teil eine zähe, dickflüssige Masse. Nach Trocknung bei 120 Grad Celsius betrug der pH-Wert beider Proben ca. 6,9. Die Produkte enthielten 13,3% Ca, 7,7% Mg und 78,6% Acetat.

Für Freilandversuche wurde grasbedeckte, schwarze Kulturerde in geschützter Lage weit abseits des Strassennetzes gewählt, wodurch eine vorangegangene Salz-Kontamination ausgeschlossen werden konnte. Anfang April wurden in vier Gruppen Jungbäumchen von Fichte und Ahorn zu je drei Stück auf einer Parzelle von je 1 m² gesetzt. In Gruppe 1 erfolgte keine Behandlung mit Streusalz; in Gruppe 2 eine Behandlung mit jeweils 20 g/m² Natriumchlorid; in Gruppe 3 eine Behandlung mit 40 g/m² und in Gruppe 4 eine solche von 80 g/m² der nach Beispiel 1 hergestellten Calcium-Magnesium-Acetate. Die erste Behandlung erfolgte nach 4 Wochen Anwachszeit; die Aufbringung von Streusalz wurde in Abständen von 2 Wochen noch zwei Mal wiederholt, wobei bei der dritten (letzten) Behandlung die Streusalzmengen jeweils verdoppelt wurden.

Alle ausgepflanzten Bäumchen begannen zwei Wochen nach Auspflanzung zu knospen und zeigten nach weiteren 2 Wochen, d.h. zum Zeitpunkt der ersten Streusalzbehandlung, bereits kleine Blätter, bzw. Nadeln. Nach zweimaliger Streusalzaufbringung (acht Wochen nach Auspflanzung) war bei Gruppe 2 ein Welken der Blattränder, bzw. eine gelb-grünliche Verfärbung der Nadeln zu erkennen, während bei Gruppe 3 überhaupt keine Schäden gegenüber Gruppe 1, und bei Gruppe 4 nur etwas schlaffere Blätter beim Ahorn, aber keine Veränderungen bei Fichte festzustellen waren. Vier Wochen nach der letzten Streusalzaufbringung waren die Blätter bzw. Nadeln fast vollständig vertrocknet und verdorrt, wogegen sich in Gruppe 4 keine wesentliche Veränderung mehr ergab.

### Beispiel 2

30 Gramm Dolomit wurden in 300 ml verdünnter Essigsäure (1:1) bei ca. 80 Grad Celsius gelöst. Die Lösung wurde am Rotavapor (Vakuum, 70 Grad Celsius) zur Trockene eingeengt. Der Rückstand wurde anschliessend im Trockenschrank bei 130 Grad Celsius getrocknet. Es konnten 85 Gramm CMA erhalten werden.

Eine Prüfung auf den Schmelzpunkt des Produktes ergab, dass dieser oberhalb einer Temperatur von 350 Grad Celsius liegt. (Zum Vergleich: Mg-Acetat 323 Grad Celsius; Ca-Acetat: Zersetzung oberhalb 160 Grad Celsius). Der pH-Wert einer wässrigen Lösung beträgt 6,2. Der Gehalt an freier Essigsäure ist minimal (0,2%).

Die Gefrierpunktserniedrigung des hergestellten Produktes beträgt:

| Gramm pro Liter Wasser | Gefrierpunktserniedrigung in Grad Celsius |
|---|---|
| 4 | −0,10 |
| 8 | −0,23 |
| 12 | −0,34 |
| 16 | −0,48 |
| 20 | −0,61 |
| 50 | −1,54 |

Da $Ca^{++}$ und $Mg^{++}$ eine stärkere Haftfestigkeit an Bodenaustauschern als $Na^{++}$ aufweisen, wird letzteres verdrängt, wobei in Anwesenheit des Acetations Na-Acetat auftritt, welches insbesondere bei stark alkalischen Böden, bzw. Salzböden z.B. mit einem pH-Wert von ca. 10, nur ein relativ geringes Absinken des originären pH-Wertes bewirken würde. Durch die Einstellung auf den pH-Wert von 6,2 kann ein weiteres Absinken auf einen stabilen pH-Wert insbesondere unter Berücksichtigung des dabei entstehenden Puffersystems erzielt werden. Eine Reduktion des hohen pH-Wertes in Alkaliböden bewirkt in jedem Falle eine Bodenmelioration speziell auch im Hinblick auf die verbesserte Nährstoffaufnahme der Pflanzen betreffend Calcium und Magnesium (die ausserdem noch Hauptbestandteil des Auftaumittels bilden).

### Beispiel 3

Bei einer jeweiligen Gesamtkonzentration von 30 Gramm pro Liter wurde die Gefrierpunktserniedrigung verschiedener Mischungsverhältnisse von Calcium-Acetat und Magnesium-Acetat mit Hilfe des Beckman-Thermometers wie folgt gemessen:

| Calcium-Acetat : Magnesium-Acetat | Gefrierpunktserniedrigung in Grad Celsius |
|---|---|
| 100 : 0 | −0,91 |
| 85 : 15 | −0,94 |
| 75 : 25 | −0,98 |
| 65 : 35 | −0,91 |
| 50 : 50 | −0,87 |
| 35 : 65 | −0,91 |
| 25 : 75 | −0,97 |
| 15 : 85 | −0,97 |
| 0 : 100 | −1,03 |

### Beispiel 4

Wie bereits erwähnt, würde in neutralen bis schwach alkalischen Böden, sowie solchen Böden, die durch vorausgegangene schädigende Umwelteinflüsse sauer geworden sind, durch Calcium- und/oder Magnesium-Acetat eine weitere Verschiebung des pH-Wertes durch die bei der Hydrolyse der Acetate freiwerdende Essigsäure in den sauren Bereich (saures Puffersystem!) erfolgen. Es ist daher ein Puffersystem im alkalischen Bereich (pH 8,2–9,0) erforderlich, welches durch Dolomit im Überschuss eingestellt werden kann, und das durch ausreichende Pufferkapazität eine Beibehaltung der originär neutralen bis schwach alkalischen Bedingungen gewährleistet.

Dasselbe Puffersystem erhöht auch bei originär sauren Böden den pH-Wert langsam aber stetig, in etwa auf 6,5 bis 7,0, womit auf jeden Fall eine Bodenverbesserung (geringere Auswaschungsrate der Pflanzennährstoffe $Ca^{++}$, $Mg^{++}$, $K^+$ usw., Ausschaltung einer eventuellen Al-Toxi-

zität der Pflanzen, bessere Lebensbedingungen für Bodenmikroorganismen etc.) erzielt wird.

Der Einsatz von Auftaumitteln mit noch höherer Alkalität (pH-Wert grösser als 9) würde sich bei obigen Bodentypen im Hinblick auf zu abrupte und zu starke pH-Änderungen im Biotop zweifellos als nachteilig erweisen.

Beispiel 5

Durch Einstellung der entsprechenden BodenpH-Werte von originär sauren Böden in den Auftaumitteln mittels Säuren (bevorzugt Essigsäure) kann für diesen Biotop-Bereich gleichfalls der optimale pH-Wert erzielt und infolge des Puffersystems auch stabil gehalten werden. Ausserdem werden die Hauptnährstoffe Calcium und Magnesium, welche für Pflanzen bei den Böden oft nur unzureichend vorhanden sind, durch das Auftaumittel zugeführt. Der pH-Wert beeinflusst nicht die Gefrierpunktserniedrigung, solange nur geringe saure und alkalische Zusätze verwendet werden.

Beispiel 6

Analog wie beim Trockenlöschverfahren bei der industriellen Kalkhydratherstellung wird verdünnte Essigsäure (vorzugsweise 1:1 biologisch oder synthetisch gewonnen), eventuell vorerwärmt auf 40–50 Grad Celsius, auf fein vermahlenen gebrannten Kalkdolomit, Kalk oder Dolomit aufgesprüht, wobei infolge der extremen Reaktion die Umsetzung zu Acetat erfolgt, ein festes Produkt anfällt und Wasser bzw. überschüssige Essigsäure verdampft, dieses Gemisch aber nach Kondensierung im Kreisprozess wieder verwendet werden kann.

Je nach Menge der eingesetzten verdünnten Essigsäure und der Umsetzungstemperatur erhält man dabei feste Produkte, welche in wässriger Lösung pH-Werte von 4,5–10 aufweisen.

Beispiel 7

Entsprechend dem Wirbelschichtverfahren wird in einem Reaktor dampfförmige verdünnte Essigsäure (wie in Beispiel 6) mit fein vermahlenem ungebranntem bzw. teilgebranntem Kalkdolomit, Kalk oder Dolomit zur Reaktion gebracht, wobei ersterer Reaktionspartner infolge Überschuss oder Nichtreaktion im Kreisprozess rückgeführt werden kann. Je nach dem Mengenanteil der beiden Reaktionspartner erhält man feste Produkte, die in wässrigen Lösungen pH-Werte von 4,5–10 aufweisen. Die Ausbeute der Herstellungsverfahren von Calcium- und Magnesium-Acetat nach Beispielen 6 und 7 beträgt mindestens 70%.

Beispiel 8

Messung verschiedener weiterer Gefrierpunktserniedrigungen.

CMA bedeutet in diesem Beispiel ein Calcium-Magnesium-Acetat des Verhältnisses $CaAc_2:MgAc_2 = 48:52$, auf einen pH-Wert über 8 eingestellt und mit verschiedenen Zusätzen versehen. Jedes Produkt wurde in dreiprozentiger wässriger Lösung gemessen.

| Produkt | Zusammensetzung | pH-Wert | Gefrierpunktserniedrigung in Grad Celsius |
|---------|-----------------|---------|-------------------------------------------|
| A | CMA | 8,1 | 0,88 |
| B | CMA + 0,2% CaO | 9,8 | 0,88 |
| C | CMA + 3,3% MgO | 9,4 | 0,87 |
| D | CMA + 15% HAc | 5,5 | 1,02 |
| E | CMA + 1% HAc | 6,9 | 0,89 |
| F | CMA + 15% CaO | 9,8 | 0,78 |
| G | CMA + 30% CaO | 9,9 | 0,67 |
| | A + 1% KCl | 8,1 | 0,90 |
| | C + 1% KCl | 9,5 | 0,89 |
| | D + 1% KCl | 5,5 | 1,03 |
| | A + 20% KCl | 8,0 | 0,97 |
| | C + 20% KCl | 9,2 | 0,99 |
| | D + 20% KCl | 5,3 | 1,23 |

Wie ersichtlich, ergibt sich bereits bei 15% CaO-Zusatz zu CMA eine deutliche Verschlechterung in der Gefrierpunktserniedrigung. Auch bei sauren CMA-Produkten ist bei einem Zusatz ab 15% CaO eine Verschlechterung der Gefrierpunktserniedrigung des originären Ausgangsproduktes logischerweise zu folgern.

Die Gefrierpunktserniedrigung ist ansonsten im pH-Bereich 7 bis 10 praktisch unabhängig vom pH-Wert, im sauren Bereich (pH = 5,5) hingegen durch den hohen Anteil an Essigsäure (15%) deutlich verbessert. Es reichen bereits relativ geringe Zusatzmengen an alkalischen Substanzen zur pH-Einstellung der originär schwach alkalischen Produkte (pH 8,1) auf höhere pH-Werte (z.B. 3,3% MgO für pH 9,4; 0,2% CaO für pH 9,8) aber auch auf niedere pH-Werte (z.B. für pH 7,0 ca. 1% Essigsäure, für pH 6,5 ca. 2% Essigsäure). Ein Zusatz von KCl (1% und 20%) beeinträchtigt die eingestellten pH-Werte diverser CMA-Produkte praktisch kaum, wohl aber wird eine deutliche Verbesserung der Gefrierpunktserniedrigung erzielt.

Ein 1%iger KCl-Zusatz zu CMA-Mischungen verschiedener CaAc/MgAc-Verhältnisse bewirkt praktisch keine Veränderung der pH-Werte in der Mischungsreihe und eine nur geringe Verbesserung der Gefrierpunktserniedrigung um ca. 0,02 Grad C analog Beispiel 9. Ein 20%iger KCl-Zusatz bewirkt eine durchschnittliche Verringerung der pH-Werte um ca. 0,2–0,4 (also nur gering!) und eine deutliche Verbesserung der Gefrierpunktserniedrigung um ca. 0,12–0,15 Grad C.

### Beispiel 9

| CaAc (Gew.%) | MgAc (Gew.%) | pH-Wert | Grad C |
|---|---|---|---|
| 100 | 0 | 7,5–10 | 0,91 |
| 85 | 15 | 7,6–10 | 0,93 |
| 75 | 25 | 7,8–10 | 0,95 |
| 65 | 35 | 7,8–10 | 0,90 |
| 50 | 50 | 7,9–10 | 0,87 |
| 35 | 65 | 8,0–10 | 0,93 |
| 25 | 75 | 8,0–10 | 0,97 |
| 15 | 85 | 8,0–10 | 0,97 |
| 0 | 100 | 8,0–10 | 1,02 |
| 100 | 0 | 5,6–5,8 | 1,00 |
| 85 | 15 | 5,6–5,8 | 1,02 |
| 75 | 25 | 5,6–5,8 | 1,05 |
| 65 | 35 | 5,6–5,8 | 1,03 |
| 50 | 50 | 5,6–5,8 | 1,00 |
| 35 | 65 | 5,6–5,8 | 1,06 |
| 25 | 75 | 5,6–5,8 | 1,08 |

### Beispiel 9 (Fortsetzung)

| 15 | 85 | 5,6–5,8 | 1,09 |
|---|---|---|---|
| 0 | 100 | 5,6–5,8 | 1,13 |

Der pH-Wert spielt im Bereich von 7,5 bis 10 so gut wie keine Rolle für die Gefrierpunktserniedrigung. Diese hängt bei wechselnden pH-Werten im wesentlichen nur vom Mischungsverhältnis CaAc/MgAC ab, wie bereits in Beispiel 3 gezeigt wurde. Erst ab höheren Zusätzen von Essigsäure tritt eine allerdings positive Beeinflussung der Gefrierpunktserniedrigung auf, wobei der obige Trend auch bei den entsprechenden Mischungsverhältnissen von CaAc/MgAc analog auftritt und bestätigt wurde.

Höhere Zusatzmengen an alkalischen Substanzen, wie z.B. CaO, MgO, $Ca(OH)_2$, gebrannter Kalk etc., ändern zwar den pH-Wert kaum, beeinträchtigen aber erheblich die Gefrierpunktserniedrigung.

### Beispiel 10

In diesem Beispiel werden die vom Gesichtspunkt der Gefrierpunktserniedrigung aus günstigsten CaAc/MgAc-Verhältnisse von 25:75 und 75:25 untersucht. Die Messungen erfolgen wieder in 3%iger wässriger Lösung.

| Produkt | Zusammensetzung | pH-Wert | Gefrierpunktserniedrigung in Grad Celsius |
|---|---|---|---|
| A | CMA (25:75) | 8,3 | 0,97 |
| B | A + 3,3% MgO | 9,2 | 0,95 |
| C | A + 15% HAc | 5,5 | 1,12 |
| D | A + 1% HAc | 6,9 | 0,97 |
| | A + 1% KCl | 8,3 | 0,98 |
| | B + 1% KCl | 9,2 | 0,96 |
| | C + 1% KCl | 5,5 | 1,13 |
| | A + 20% KCl | 8,1 | 1,07 |
| | B + 20% KCl | 9,1 | 1,07 |
| | C + 20% KCl | 5,4 | 1,24 |
| E | CMA (75:25) | 8,1 | 0,94 |
| F | E + 3,3% MgO | 9,5 | 0,93 |
| G | E + 15% HAc | 5,6 | 1,08 |
| H | E + 1% HAc | 7,0 | 0,94 |
| | E + 1% KCl | 8,1 | 0,95 |
| | F + 1% KCl | 9,5 | 0,94 |
| | G + 1% KCl | 5,6 | 1,09 |
| | E + 20% KCl | 7,9 | 1,06 |
| | F + 20% KCl | 9,3 | 1,05 |
| | G + 20% KCl | 5,5 | 1,24 |

Das Verhalten von CMA mit den Mischungsverhältnissen CaAc/MgAc = 25:75 bzw. 75:25 ist praktisch analog der Mischung der Reinsalze in obigen Verhältnissen. Es gelten daher auch dieselben Aussagen wie in Beispiel 10 getroffen.

### Beispiel 11

Es wurde die pH-Verschiebung gemessen, die einerseits durch konventionelle (pH 7,8), andererseits durch erfindungsgemässe Auftaumittel in verschiedenen Bodentypen bewirkt wird. Die Messung erfolgte nach Nehring in einer Aufschlämmung der Bodenproben in destilliertem Wasser mit 1% CMA-Zusatz.

| Bodentyp | pH-Wert des erfindungs- gemässen CMA | pH-Messung nach Nehring | |
|---|---|---|---|
| | | erfindungsgemäss | konventionell |
| Originär saurer Waldboden (pH 5,0) | 6,0 | 5,2 | 5,5 |
| Schwach alkalischer Tonboden (pH 8,0) | 8,4 | 8,0 | 7,8 |
| Stark alkalischer Kalk-Tonboden (pH 8,9) | 6,5 | 7,6 | 8,5 |
| Durch Umwelteinflüsse sauer gewordener Boden (pH 5,0) | 8,5 | 6,0 | 5,5 |

Bei einem Zusatz von 1% KCl zu den verwendeten CMA ergibt sich keine Veränderung der pH-Werte der Böden, bei einem Zusatz von 20% KCl wird der pH-Wert der Böden um nur 0,1 bis maximal 0,2 erniedrigt.

Im originär sauren Boden tritt mit CMA vom pH-Wert 6,0 im Gegensatz zu einem konventionellen (pH 7,8) nur eine geringe Verschiebung des ursprünglichen Wertes ein, was erwünscht ist. Ebenso tritt keine Änderung des pH-Wertes von 8 bei Tonboden auf, wenn CMA mit pH 8,4 eingesetzt wird, wohingegen bei CMA mit pH 7,8 bereits eine, wenn auch geringe, Verschiebung in Richtung Neutralpunkt auftritt, was aus ökologischen Gründen (Biotop: Mikroorganismen, Pflanzen) manchmal nicht erwünscht ist.

Bei stark alkalischen Böden wird bei Einsatz von CMA mit pH 6,5 eine gewünschte deutliche Reduzierung des pH-Wertes erreicht, was man mit CMA 7,8 nicht erzielt. Ferner wird ein durch Umwelteinfluss sauer gewordener Boden durch CMA mit pH 8,5 deutlich gegen den Neutralpunkt (pH 6,0) verschoben und dadurch verbessert, was mit CMA von pH 7,8 nur in erheblich geringerem Ausmass erfolgt.

Beispiel 12

Auswaschversuche auf Bodensäulen mit destilliertem Wasser.

Auf einer Bodensäule von 6 cm Durchmesser und 2 cm Höhe (50 g) wird 1% CMA aufgebracht und mit 50 ml destilliertem Wasser eluiert.

– originär saurer Waldboden von pH 5,0:

| | pH Boden | pH Eluat |
|---|---|---|
| + CMA (pH 7,8) | 5,5 | 5,6 |
| + CMA (pH 6,0) | 5,2 | 5,3 |

– neutral bis schwach alkalischer Tonboden von pH 8,0:

| | pH Boden | pH Eluat |
|---|---|---|
| + CMA (pH 7,8) | 7,8 | 7,7 |
| + CMA (pH 8,4) | 8,0 | 7,9 |

– stark alkalischer Kalk-Tonboden von pH 8,9:

| | pH Boden | pH Eluat |
|---|---|---|
| + CMA (pH 7,8) | 8,5 | 8,6 |
| + CMA (pH 6,5) | 7,6 | 7,5 |

– durch Umwelteinfluss sauer gewordener Waldboden (pH 5,0)

| | pH Boden | pH Eluat |
|---|---|---|
| + CMA (pH 7,8) | 5,5 | 5,6 |
| + CMA (pH 8,5) | 6,0 | 5,9 |

Die positiven Auswirkungen von CMA mit diversen pH-Stufen im Vergleich zu einem Produkt mit pH 7,8 sind praktisch vergleichbar jenen der direkten Kontakt-pH-Verschiebung von CMA und Böden. Obiger Versuch soll eine längerdauernde positive Wirkung von CMA mit definierten pH-Werten auf Boden und Eluate bei Einfluss von destilliertem Wasser (Regen) demonstrieren.

Beispiel 13

Es wurden Wachstumsversuche mit verschiedenen Pflanzen durchgeführt, welche in spezifischen pH-Bereichen optimal gedeihen. Es wurden wiederum konventionelle Auftaumittel (CMA mit pH-Wert 7,8) den erfindungsgemäss eingestellten CMA-Mitteln gegenübergestellt. Das Wachstum wurde jeweils 11 Tage nach Anpflanzung begutachtet:

a) originär saurer Waldboden von pH 5,0:
Pflanze: Lupine
Streusalz (1 g/dm²): CMA 7,8, bzw. 6,0
Bei CMA mit pH 6,0 zwar geringes, aber immerhin deutlich besseres Wachstum als bei CMA mit pH 7,8.

b) neutral bis schwach alkalischer Tonboden von pH 8,0:
Pflanze: Luzerne
Streusalz (1 g/dm²): CMA 7,8, bzw. 8,4
Bei CMA mit pH 8,4 tritt zwar nur sehr vereinzeltes Wachstum, bei CMA mit pH 7,8 hingegen überhaupt kein Wachstum auf.

c) stark alkalischer Kalk-Tonboden von pH 8,9:
Pflanze: Weizen
Streusalz: (1 g/dm²): CMA pH 7,8, bzw. 6,5
Bei CMA mit pH 6,5 zwar geringes, aber immerhin deutlich besseres Wachstum als bei CMA mit pH 7,8.

d) künstlich saurer Boden:
Pflanze: Gerste

Streusalz (1 g/dm²): CMA 7,8, bzw. 8,5
Bei CMA mit pH 8,5 zwar geringes, aber immerhin deutlich besseres Wachstum als bei CMA mit pH 7,8.

Beispiel 14

Messung der Chloridionenaufnahme durch Pflanzen auf einem Boden, der mit chloridionenhaltigen Auftaumitteln versetzt wurde:

| Substanz in g/dm² | Cl' in g/dm² | 80 g Weizen/dm² Cl in mg/g TS | 5 g Raps/dm² Cl in mg/g TS |
|---|---|---|---|
| KCl 0,2 | 0,0951 | 15,9 | 16,0 |
| KCl + CMA 0,2 + 0,8 | 0,0951 | 13,2 | 10,1 |
| NaCl 0,1567 | 0,0951 | 16,8 | 22,1 |

Es zeigt sich, dass CMA in erfindungsgemässer Einstellung die Chloridionenaufnahme der Pflanzen beträchtlich unterdrückt, was durchaus erwünscht ist.

**Patentansprüche**

1. Gefrierschutz- und Bodenverbesserungsmittel, enthaltend Calcium- und Magnesiumacetat, das zusätzlich den pH-Wert verschiebende Komponenten enthält, dadurch gekennzeichnet, dass es alternativ saure oder alkalische Komponenten in einer solchen Menge enthält, dass es in einer 0,5 bis 10%igen wässrigen Lösung bei Verwendung in der Gegend originär saurer oder stark alkalischer oder salzhaltiger Böden einen pH-Wert von weniger als 7,0, bei Verwendung in der Gegend neutraler bis schwach alkalischer, bzw. durch schädigende Umwelteinflüsse sauer gewordener Böden einen pH-Wert von mehr als 8,0 und maximal 9,5, vorzugsweise 8,2 bis 9,0 ergibt.

2. Mittel nach Anspruch 1, dadurch gekennzeichnet, dass die saure Komponente Essigsäure ist.

3. Mittel nach Anspruch 1 oder 2, dadurch gekennzeichnet, dass bei Verwendung in der Gegend originär saurer Hochmoor- oder Waldböden der pH-Wert unter 5,5 bis 6,0, bei Verwendung in der Gegend stark alkalischer oder salzhaltiger Böden der pH-Wert 5,5 bis 6,5 beträgt.

4. Mittel nach Anspruch 1, dadurch gekennzeichnet, dass die alkalische Komponente Oxyde, Hydroxyde und/oder Karbonate von Calcium und/oder Magnesium enthält.

5. Mittel nach einem der vorhergehenden Ansprüche, dadurch gekennzeichnet, dass die zusätzlichen Komponenten in einer solchen Menge vorliegen, dass das Mittel insgesamt maximal 80 Gewichtsprozent, vorzugsweise 20 bis 30, oder 65 bis 80 Gewichtsprozent Magnesiumacetat enthält.

6. Mittel nach einem der vorhergehenden Ansprüche, dadurch gekennzeichnet, dass die zusätzlichen Komponenten in einer Menge von weniger als 15, vorzugsweise von 0,1 bis 4 Gewichtsprozent vorliegen.

7. Mittel nach einem der Ansprüche 4–6, dadurch gekennzeichnet, dass es 0,1 bis 4% Magnesiumoxyd, -hydroxid und/oder -karbonat enthält.

8. Mittel nach einem der vorhergehenden Ansprüche, dadurch gekennzeichnet, dass es zusätzlich 1 bis 20, vorzugsweise etwa 10 Gewichtsprozent Kaliumchlorid enthält.

9. Verfahren zur Herstellung des Mittels nach einem der Ansprüche 1 bis 6, dadurch gekennzeichnet, dass ein Überschuss von dampfförmiger Essigsäure mit fein vermahlenem Calcium- und/oder Magnesium-Karbonat, -Oxyd und/oder -Hydroxyd in einer Wirbelschicht zur Reaktion gebracht und der Essigsäureüberschuss nach Kondensation im Kreislauf zurückgeführt wird, wonach dem Reaktionsprodukt gegebenenfalls noch unreagiertes Calcium- und/oder Magnesium-Karbonat, -Oxyd und/oder -Hydroxyd zugesetzt wird.

**Claims**

1. An antifreezing agent and soil conditioner which contains calcium acetate and magnesium acetate and additionally contains components which shift the pH, characterized in that it alternatively contains acidic or alkaline components in an amount such that, in a 0.5 to 10 percent aqueous solution, it gives a pH of less than 7.0 when used in a region of original acidic or strongly alkaline or salt-containing soils, and a pH of more than 8.0 and not more than 9.0, preferably 8.2 to 9.0, when used in a region of neutral to weakly alkaline soils or soils which have become acidic as a result of harmful environmental effects.

2. An agent according to Claim 1, characterized in that the acidic component is acetic acid.

3. An agent according to Claim 1 or 2, characterized in that, when used in a region of original acidic moorland or forest soils, the pH is less than 5.5 to 6.0 and, when used in a region of highly alkaline or salt-containing soils, the pH is 5.5 to 6.5.

4. An agent according to Claim 1, characterized in that the alkaline component contains oxides, hydrodixes and/or carbonates of calcium and/or magnesium.

5. An agent according to any of the preceding Claims, characterized in that the additional components are present in an amount such that the agent contains altogether not more than 80 percent by weight, preferably 20 to 30, or 65 to 80, percent by weight of magnesium acetate.

6. An agent according to any of the preceding Claims, characterized in that the additional components are present in an amount of less than 15, preferably from 0.1 to 4, percent by weight.

7. An agent according to any of Claims 4 to 6, characterized in that it contains 0.1 to 4% of magnesium oxide, hydroxyde and/or carbonate.

8. An agent according to any of the preceding Claims, characterized in that it additionally contains 1 to 20, preferably about 10, percent by weight of potassium chloride.

9. A process for the preparation of the agent according to any of Claims 1 to 6, characterized in that an excess of acetic acid vapour is reacted with finely milled calcium carbonate, oxide and/or hydroxide and/or magnesium carbonate, oxide and/or hydroxide in a fluidized bed, and the excess acetic acid is condensed and then recycled, after which any unreacted calcium carbonate, oxide and/or hydroxide and/or magnesium carbonate, oxide and/or hydroxide is added to the reaction product.

## Revendications

1. Agent de protection contre le gel et d'amélioration des sols, contenant de l'acétate de calcium et de l'acétate de magnésium, et qui contient en plus des composants qui font varier la valeur du pH, caractérisé en ce qu'il contient des composants alternativement acides ou alcalins en une quantité telle que, en solution aqueuse à 0,5–10%, il fournit, lorsqu'on l'utilise au voisinage de sols originellement acides, fortement alcalins ou contenant des sels, une valeur de pH inférieure à 7,0, et lorsqu'on l'utilise au voisinage de sols neutres à faiblement alcalins, ou de sols devenus acides à la suite de l'influence polluante de l'environnement, une valeur de pH de plus de 8,0 et d'au maximum 9,5, et de préférence comprise entre 8,2 et 9,0.

2. Agent conforme à la revendication 1, caractérisé en ce que le composant acide est de l'acide acétique.

3. Agent conforme à la revendication 1 ou 2, caractérisé en ce que, lorsqu'on l'utilise au voisinage de sols originellement acides de forêts ou de marais, la valeur du pH se situe au-dessous de 5,5 à 6,0, et lorsqu'on l'utilise au voisinage de sols fortement alcalins ou contenant des sels, la valeur du pH est de 5,5 à 6,5.

4. Agent conforme à la revendication 1, caractérisé en ce que les composants alcalins contiennent des oxydes, hydroxydes et/ou carbonates de calcium et/ou de magnésium.

5. Agent conforme à l'une des revendications précédentes, caractérisé en ce que les composants supplémentaires sont présents en une quantité telle que l'agent contienne au total 80% en poids au maximum, de préférence 20 à 30, ou 65 à 80% en poids d'acétate de magnésium.

6. Agent conforme à l'une des revendications précédentes, caractérisé en ce que les composants supplémentaires sont présents en une quantité inférieure à 15%, de préférence de 0,1 à 4% en poids.

7. Agent conforme à l'une des revendications 4 à 6 caractérisé en ce qu'il contient de 0,1 à 4% d'oxyde, hydroxyde et/ou carbonate de magnésium.

8. Agent conforme à l'une des revendications précédentes, caractérisé en ce qu'il contient en plus de 1 à 20, de préférence environ 10% en poids, de chlorure de potassium.

9. Procédé de fabrication de l'agent conforme à l'une des revendications 1 à 6, caractérisé en ce que l'on fait réagir en lit fluidisé un excès d'acide acétique sous forme de vapeur avec du carbonate, oxyde et/ou hydroxyde de calcium et/ou magnésium, finement broyé, et en ce que l'on recycle l'excès d'acide acétique après condensation, après quoi l'on ajoute éventuellement au produit de réaction du carbonate, oxyde et/ou hydroxyde de calcium et/ou de magnésium qui n'a pas encore réagi.